# EUROPEAN PATENT SPECIFICATION

(11) **EP 3 472 771 B1**
(45) Date of publication and mention of the grant of the patent: **25.01.2023**
(21) Application number: 17733319.2
(22) Date of filing: 16.06.2017
(51) Int. Cl.: G06Q 10/08, G06Q 10/06

(54) **PRODUCT PRODUCER REQUIREMENT MANAGEMENT SYSTEM**
ANFORDERUNGSMANAGEMENTSYSTEM FÜR PRODUKTHERSTELLER
SYSTÈME DE GESTION DES EXIGENCES DE PRODUCTEUR DE PRODUITS

(30) Priority: 17.06.2016 US 201662351745 P
(43) Date of publication of application: 24.04.2019
(73) Proprietor: Carrier Corporation, Jupiter, FL 33478 (US)
(72) Inventor: CHOPKO, Robert A., Syracuse, New York 13221 (US); POOLMAN, Ciara, Syracuse, New York 13057 (US); BEASLEY, Marc, Beverly, Massachusetts 01915 (US); CRONIN, John, Williston, Vermont 05495 (US); WILSON, Dylan Jonathan, Williston, Vermont 05495 (US)
(74) Representative: Dehns
(86) International application number: PCT/US2017/037913
(87) International publication number: WO 2017/218915

(56) References cited:
- US-A1- 2003 177 048
- US-A1- 2004 139 053
- US-A1- 2008 230 606
- US-A1- 2009 271 243
- US-A1- 2011 040 660
- US-A1- 2013 036 068
- US-A1- 2014 222 521
- US-A1- 2015 203 297
- US-A1- 2016 034 907

## Description

### BACKGROUND OF THE DISCLOSURE

The embodiments disclosed herein generally relate to cold chain distribution systems, and more specifically to an apparatus for monitoring product requirements.

Typically, cold chain distribution systems are used to transport and distribute perishable goods and environmentally sensitive goods (herein referred to as a product) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated trucks and trailers are commonly used to transport perishable goods in a cold chain distribution system. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

Maintaining brand name quality has become increasing important in an era of social networking where one bad tweet may lead to a never ending hashtag of bad publicity for a product producer. Thus, product producers are becoming increasingly concerned with the transportation of their products to market to ensure that product quality does not diminish during transit. Product producer may set handling and packaging requirements to help control product quality but it is often difficult to track the product requirements as the product may change hands several times along the transportation route. Thus, making it difficult for the product producers to ensure their product is being handled properly. Improved systems, particularly improved product requirements tracking systems would provide benefits to the industry.

US 2009/271243 A1 discloses a system and method for providing product quality and safety.

US 2014/222521 A1 discloses a system and method for monitoring and verifying parameter compliance within a distributed work environment such as a food supply chain.

### BRIEF DESCRIPTION OF THE DISCLOSURE

According to an aspect of the invention, there is provided cold chain distribution system comprising: a transport refrigeration system comprising a transport refrigeration unit and an environmentally controlled container for a product; and a system for monitoring product requirements, the system comprising: at least one sensor configured to monitor product parameters associated with the product and transmit the product parameters to a storage device; a storage device to store standard product requirements, product producer requirements, and the product parameters associated with the product, wherein the product producer requirements are the requirements from a producer of the product for handling of the product; a requirement management system coupled to the storage device, the requirement management system including: a requirement generation module to determine the product producer requirements in response to a product producer input and the standard product requirements, the standard product requirements including government regulations or industry standards, wherein the requirement generation module is configured to correct the product producer requirement when the product producer requirement conflicts with the standard product requirement; and a requirement tracking module to determine requirement performance parameters in response to at least one of the product parameters, standard product requirements, and product producer requirements; and a user device, wherein the requirement tracking module is configured to transmit the requirement performance parameters to the user device, wherein the requirement performance parameters are configured as a map displaying time-based locations of the product along with the requirement performance parameters at the time-based locations; and wherein the user device is configured to activate an alarm when a product producer requirement is not satisfied and allow the product producer to adjust the operation of the transport refrigeration unit through the user device.

The requirement generation module may be configured to receive product producer input from the user device.

The user device may be configured to activate an alarm when a product producer requirement is not satisfied.

The requirement performance parameters may be further configured as at least one of a data table of requirement performance parameters, and a requirement performance parameters versus time graph.

According to another aspect, there is provided a method of monitoring product requirements in a cold chain distribution system comprising a transport refrigeration system comprising a transport refrigeration unit and an environmentally controlled container for a product; the method comprising: monitoring, using at least one sensor, product parameters associated with product and transmitting the product parameters to a storage device; storing, using a storage device, standard product requirements, product producer requirements, and the product parameters associated with the product, wherein the product producer requirements are the requirements from a producer of the product for handling of the product; analyzing, using a requirement management system, at least one of the standard product requirements, the product producer requirements, and the product parameters, the requirement management system coupled to the storage device, the requirement management system including a requirement generation module and a requirement tracking module, the method comprising: determining, using the requirement generation module, the product producer requirements in response to a product producer input and the standard product requirements, the standard product requirements including government regulations or industry standards; correcting, using the requirement generation module, the product producer requirement when the product producer requirement conflicts with the standard product requirement; determining, using the requirement tracking module, requirement performance parameters in response to at least one of the product parameters, standard product requirements, and product producer requirements; and transmitting, using the requirement tracking module, the requirement performance parameters to a user device, wherein the requirement performance parameters are configured as a map displaying time-based locations of the product along with the requirement performance parameters at the time-based locations; wherein the user device is configured to activate an alarm when a product producer requirement is not satisfied and allow the product producer to adjust the operation of a transport refrigeration unit of the transport refrigeration system through the user device.

The method may include receiving, using the requirement generation module, product producer input from a user device.

The method may include activating, using the user device, an alarm when the product producer requirement is not satisfied.

The requirement performance parameters may be further configured as at least one of a data table of requirement performance parameters, and a requirement performance parameters versus time graph.

Technical effects of embodiments of the present invention include tracking the handling of products during transportation and comparing against product producer requirements to ensure desired levels of product quality.

These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 illustrates a schematic view of a system for monitoring product requirements, according to an embodiment of the present disclosure;
FIG. 2 illustrates a schematic view a cold chain distribution system that may incorporate embodiments of the present disclosure; and
FIG. 3 is a flow diagram illustrating a method of monitoring product requirements, according to an embodiment of the present disclosure.

### DETAILED DESCRIPTION OF THE DISCLOSURE

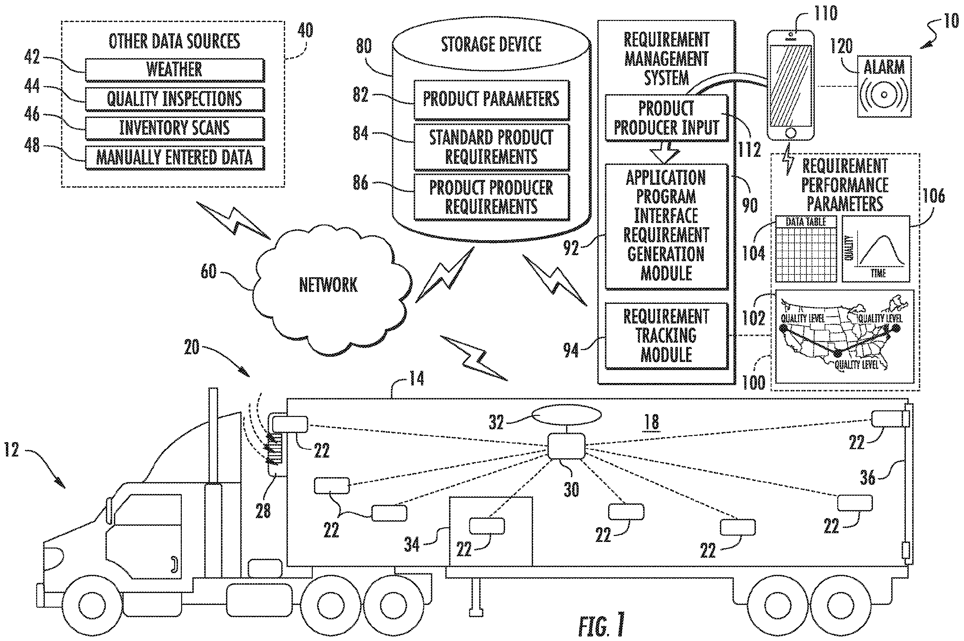

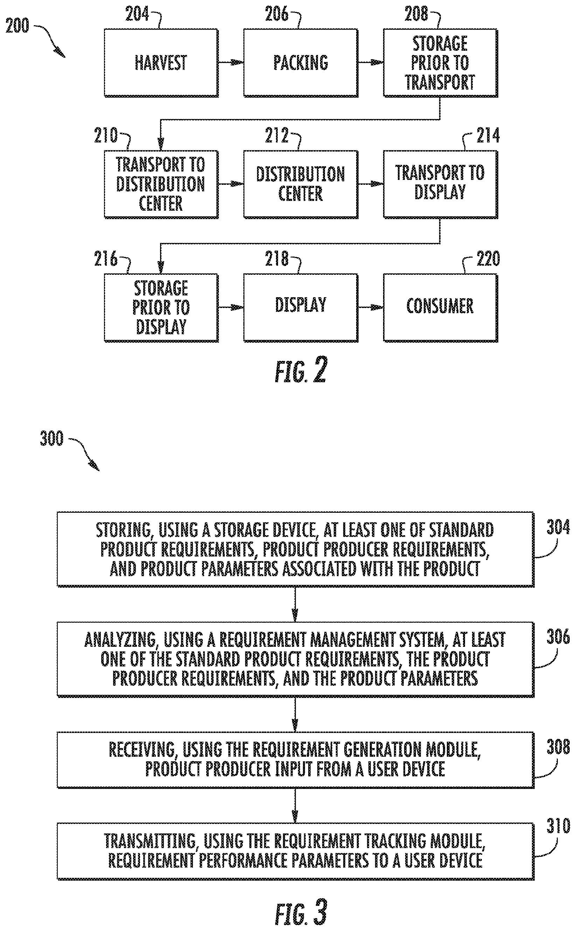

Referring now to the drawings, FIG. 1 illustrates a schematic view of a system 10 for monitoring product requirements, according to an embodiment of the present disclosure. FIG. 2 illustrates a schematic view a cold chain distribution system 200 that may incorporate embodiments of the present disclosure. Typically, transport refrigeration systems 20 are used to transport and distribute perishable goods and environmentally sensitive goods (herein referred to as a product 34). It is also understood that while the illustrated embodiment describes perishable products 34 traveling through a cold chain distribution system 200, embodiments described herein may be applied to products 34 that are non-perishable. In the illustrated embodiment, a transport refrigeration system 20 includes an environmentally controlled container 14, a transport refrigeration unit 28 and product 34. The container 14 may be pulled by a tractor 12. It is understood that embodiments described herein may be applied to shipping containers that are shipped by rail, sea, or any other suitable container, without use of a tractor 12. The container 14 may define an interior compartment 18.

In the illustrated embodiment, the transport refrigeration unit 28 is associated with a container 14 to provide desired environmental parameters, such as, for example temperature, pressure, humidity, carbon dioxide, ethylene, ozone, light exposure, vibration exposure, and other conditions to the interior compartment 18. In further embodiments, the transport refrigeration unit 28 is a refrigeration system capable of providing a desired temperature and humidity range. The product 34 may include but is not limited to fruits, vegetables, grains, beans, nuts, eggs, dairy, seed, flowers, meat, poultry, fish, ice, blood, pharmaceuticals, or any other suitable cargo requiring cold chain transport.

In the illustrated embodiment, the transport refrigeration system 20 includes sensors 22. The sensors 22 may be utilized to monitor product parameters 82 associated with the product 34. The product parameters 82 monitored by the sensors 22 include but are not limited to at least one of temperature, pressure, humidity, carbon dioxide, ethylene, ozone, light exposure, and vibrations, and may include other other conditions in the interior compartment 18. Accordingly, suitable sensors 22 are utilized to monitor the desired product parameters 82. Advantageously, sensors 22 may be selected for certain applications depending on the type of product 34 to be monitored and the corresponding environmental sensitivities. In an embodiment, temperatures are monitored. As seen in FIG. 1, the sensors 22 may be placed directly on the product 34.

The sensors 22 may be placed in a variety of locations including but not limited to on the transport refrigeration unit 28, on a door 36 of the container 14 and throughout the interior compartment 18. The sensors 22 may be placed directly within the transport refrigeration unit 28 to monitor the performance of the transport refrigeration unit 28. As seen, the sensors 22 may also be placed on the door 36 of the container 14 to monitor the position of the door 36. Whether the door 36 is open or closed affects both the temperature of the container 14 and the product 34. For instance, in hot weather, an open door 36 will allow cooled air to escape from the container 14, causing the temperature of the interior compartment 18 to rise, thus affecting the temperature of the product 34. Additionally, a global positioning system (GPS) location may also be detected by the sensors 22. The GPS location may help in providing time-based location information for the product providing time-based location information for the product 34 that will help in tracking the travel route and other product parameters 82 along that route. For instance, the GPS location may also help in providing information from other data sources 40 regarding weather 42 experienced by the container 14 along the travel route. The local weather 42 affects the temperature of the container 14 and thus may affect the temperature of the product 34.

As illustrated in FIG. 1, the transport refrigeration system 20 may further include, a controller 30 configured to log a plurality of readings from the sensors 22, known as the product parameters 82, at a selected sampling rate. The controller 30 may be enclosed within the transport refrigeration unit 28 or separate from the transport refrigeration unit 28 as illustrated. The product parameters 82 may further be augmented with time, location stamps or other relevant information. The controller 30 may also include a processor (not shown) and an associated memory (not shown). The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

In an illustrated embodiment, the transport refrigeration system 20 may include a communication module 32 in operative communication with the controller 30 and in wireless operative communication with a network 60. The communication module 32 is configured to transmit the product parameters 82 to the network 60 via wireless communication. The wireless communication may be, but is not limited to, radio, microwave, cellular, satellite, or another wireless communication method. The network 60 may be but is not limited to satellite networks, cellular networks, cloud computing network, wide area network, or another type of wireless network. The communication module 32 may include a short range interface. The short range interface may include at least one of: a wired interface, an optical interface, and a short range wireless interface.

Product parameters 82 may also be provided by other data sources 40, as illustrated in FIG.1. These other data sources 40 may be collected at any point throughout the cold chain distribution system 200, which as illustrated in FIG. 2 may include harvest 204, packing 206, storage prior to transport 208, transport to distribution center 210, distribution center 212, transport to display 214, storage prior to display 216, display 218 and consumer 220. These stages are provided for illustrative purposes and a distribution chain may include fewer stages or additional stages, such as, for example a cleaning stage, a processing stage, and additional transportation stages. The other data sources 40 may include, but are not limited to, weather 42, quality inspections 44, inventory scans 46, and manually entered data 48. The weather 42, as discussed above, has an effect on the operation of the transport refrigeration unit 28 by influencing the temperature of the container 14 during transport (e.g., 210 and 214) but the weather 42 also has other influences on the transport refrigeration unit 28. For instance, the weather 42 prior to and at harvest 204 may have an impact on the quality of the product 34, which may affect freshness. Moreover, quality inspections 44, similar to the weather 42, may reveal data of the product 34 that affects freshness. For instance, a particular batch of strawberries may have been subjected to rainfall at harvest 204, making them prone to spoilage. Quality inspections 44 may be done by a machine or a human being. Quality inspections 44 performed by a machine may be accomplished using a variety of techniques including but not limited to optical, odor, soundwave, infrared, or physical probe.

Further, inventory scans 46 may also reveal product parameters 82 about the product 34 and may help in tracking the product 34. For instance, the inventory scan 46 may reveal the time, day, truck the product arrived on, which may help identify the farm if previously unknown. While the system 10 includes sensors 22 to aid in automation, often times the need for manual data entry is unavoidable. The manually entered data 48 may be input via a variety of devices including but not limited to a cellular phone, tablet, laptop, smartwatch, a desktop computer or any other similar data input device known to one of skill in the art.

Product parameters 82 collected throughout each stage of the cold chain distribution system 200 may include environment conditions experienced by the product 34 such as, for example, temperature, pressure, humidity, carbon dioxide, ethylene, ozone, vibrations, light exposure, weather, time and location. For instance, strawberries may have experienced an excessive shock or were kept at 34°F during transport. Product parameters 82 may further include attributes of the product 34 such as, for example, temperature, weight, size, sugar content, maturity, grade, ripeness, labeling, and packaging. For instance, strawberries may be packaged in 1 pound clamshells, be a certain weight or grade, be organic, and have certain packaging or labels on the clamshells. Product parameters 82 may also include information regarding the operation of the environmental control unit 28, as discussed above. The product parameters 82 may further be augmented with time, location stamps or other relevant information.

In the illustrated embodiment, the system 10 further includes a storage device 80 to store the product parameters 82 associated with the product 34. At least one of the product storage device 80 may be but is not limited to a random access memory (RAM), read only memory (ROM), or other electronic, optical, magnetic or any other computer readable medium.

As shown, the storage device 80 also stores standard product requirements 84 and product producer requirements 86. The standard product requirements 84 include government regulations or industry standards and may be requirements for handling and/or packaging the product 34. The product producer requirements 86 are the specific requirements from the producer of the product 34 for handling and may include specific requirements from the producer of the product 34 for packaging the product 34. The standard product requirements 84 and the product producer requirements 86 will set the levels for what product parameters 82 the product 34 should experience during the cold chain distribution system 200. For instance, the standard product requirements 84 and the product producer requirements 86 may dictate that eggs need to be kept at forty degrees Fahrenheit and stored in recycled cardboard egg crate containers. Further, other product producer requirements 86 may include that requirements on the tractor 12 and/or driver such as, for example container capacity 14, transport refrigeration system 20 equipment, travel routes, or travel time. In an example of a product producer requirement 86, the tractor 12 and overall transport refrigeration system 20 must be air-ride equipped to reduce vibrations and shock to the product 34. In another example, the doors 36 of the container 14 must remained closed from the time the product 34 is picked-up to the time the product is delivered to prevent theft. In another example, the tractor 12 must avoid a selected high theft route.

In the illustrated embodiment, the system 10 further includes a requirement management system 90. The requirement management system 90 is connected to the communication module 32 through the network 60. The requirement management system 90 is also coupled to the storage device 80. As shown, the requirement management system 90 includes a requirement generation module 92 and a requirement tracking module 94. The requirement management system 90 may also include a processor (not shown) and an associated memory (not shown). The associated memory may be the storage device 80. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium. The requirement generation module 92 and the requirement tracking module 94 may be implemented in software as applications executed by the processor of requirement management system 90.

The requirement generation module 92 determines product producer requirements in response to at least one of product producer input 112 and standard product requirements 84. The requirement generation module 92 is an application program interface between product producers and the storage device 80. The requirement generation module allows the product producers to generate their own product producer requirements 86 using a user device 110. The user device 110 may be a device such as, for example, a cellular phone, tablet, laptop, smartwatch, desktop computer or any similar device. The requirement generation module 92 may allow the product producer to utilize the standard product requirements 84 as a starting point in developing the product producer requirements 86. The requirement generation module 92 corrects a product producer requirement 86 when it conflicts with a standard product requirement 84. For instance, if a product producer only wants the product producer requirements 86 to have eggs kept at a temperature below sixtyfive degrees Fahrenheit, while the U.S. Food and Drug Administration requires eggs to be kept below forty degrees Fahrenheit, the requirement generation module 92 will correct to the stricter requirement. The requirement generation module 94 may issue a notification to the product producer in the form of an alarm 120 on the user device 110, when a product producer requirement 86 has been corrected. Once the product producer requirements 86 have been established and saved to the storage device 80 the product producer could continuously use and update the product producer requirements 86 from their user device 110. Thus, when products 34 are picked up by transport refrigeration system 20, all the product producer requirements 86 may be communicated through the network 60 from the storage device 80 to the controller 30 to ensure that proper environmental conditions are maintained inside the interior compartment 18.

The requirement tracking module 94 determines requirement performance parameters 100 in response to at least one of product parameters 82, standard product requirements 84, and product producer requirements 86. The requirement performance parameters 100 show the product parameters 82 throughout the cold chain distribution system 200 in comparison to the requirements 84, 86; so that the quality of the product 34 may be maintained throughout the journey. In an embodiment, the requirement performance parameters 100 may include the product parameters 82 at a particular time and location. The requirement performance parameters 100 are transmitted to the user device 110. The requirement performance parameters 100 are configured as a map 102 displaying time-based locations of the product 34 along with the requirement performance parameters 100 at the time-based locations, and may be further configured as at least one of a data table 104 of requirement performance parameters 100, a requirement performance parameters 100 versus time graph 106, a text write-up (not shown), or any other method of displaying parameters known to one of skill in the art. The requirement tracking module 94 can instruct a user device 110 to activate an alarm 120 when a product producer requirement 86 is not satisfied. The alarm 120 may be an audible and/or visual alert on the user device 110. Additionally, a product producer is able to adjust the operation of the refrigeration unit 28, through the user device 110. In one example, a product producer may be able to change the temperature if the temperature requirements are not being met. In another example, a producer may be able to do a fresh air exchange to reduce the ethylene content in the container 14.

The product producer may be able to enter in some information into their user device 110 have access to requirement performance parameters 100 that detail the entire journey of the product 34 from harvest 204 to consumer 220. For instance, the product producer may be able to see the route the product 34 had taken from farm-to-fork and ensure that the requirements were met for product 34 throughout that route.

Referring now also to FIG. 3, which shows a flow diagram illustrating a method 300 of monitoring product 34 requirements, according to an embodiment of the present disclosure. At block 304, the storage device 80 storing at least one of standard product requirements 84, product producer requirements 86, and product parameters 82 associated with the product 34. At block 306, the requirement management system 90 analyzes at least one of the standard product requirements 84, product producer requirements 86, and product parameters 82. The requirement management system 90 is coupled to the storage device 80. The requirement management system 90 includes: the requirement generation module 92 to determine product producer requirements 86 in response to at least one of product producer input 112 and the standard product requirements 84; and the requirement tracking module 94 to determine requirement performance parameters 100 in response to at least one of the product parameters 82, standard product requirements 84, and product producer requirements 86. At block 308, the requirement generation module 92 receives product producer input 112 from a user device 110. At block 310, the requirement tracking module 94 transmits requirement performance parameters 100 to a user device 110.

The method 300 also includes the user device 110 activating an alarm 120 when the product producer requirement 86 is not satisfied. The method 300 includes monitoring, using at least one sensor 22, the product parameters 82 and transmitting the product parameters 82 to the storage device 80. The method 300 includes correcting, using the requirement generation module 92, the product producer requirement 86 when the product producer requirement 86 conflicts with the standard product requirement 84.

While the above description has described the flow process of FIG. 3 in a particular order, it should be appreciated that unless otherwise specifically required in the attached claims that the ordering of the steps may be varied.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the invention as defined by the claims. Accordingly, the invention is not to be seen as limited by the foregoing description, but is only limited by the scope of the appended claims.

## Claims

1. A cold chain distribution system (200) comprising:
a transport refrigeration system (20) comprising a transport refrigeration unit (28) and an environmentally controlled container (14) for a product (34); and
a system for monitoring product requirements, the system comprising:
at least one sensor (22) configured to monitor product parameters (82) associated with the product and transmit the product parameters to a storage device (80), wherein the product parameters include at least one of temperature, pressure, humidity, carbon dioxide, ethylene, ozone, light exposure, and vibrations;
a storage device (80) to store standard product requirements (84), product producer requirements (86), and the product parameters (82) associated with the product, wherein the product producer requirements are the requirements from a producer of the product for handling of the product;
a requirement management system (90) coupled to the storage device, the requirement management system including:
a requirement generation module (92) to determine the product producer requirements in response to a product producer input (112) and the standard product requirements, the standard product requirements including government regulations or industry standards, wherein the requirement generation module is configured to correct the product producer requirement when the product producer requirement conflicts with the standard product requirement; and
a requirement tracking module (94) to determine requirement performance parameters (100) in response to at least one of the product parameters, standard product requirements, and product producer requirements; and
a user device (110), wherein the requirement tracking module (94) is configured to transmit the requirement performance parameters (100) to the user device (110), wherein the user device is configured to activate an alarm (120) when a product producer requirement (86) is not satisfied; **characterized in that**
the requirement performance parameters (100) are configured as a map (102) displaying time-based locations of the product (34) along with the requirement performance parameters at the time-based locations; and
wherein the user device is configured to allow the product producer to adjust the operation of the transport refrigeration unit through the user device.

2. The system of claim 1, wherein:
the requirement generation module (92) is configured to receive from the user device (110) the product producer input (112).

3. The system of claim 1, wherein:
the user device (110) is configured to activate an alarm (120) when a product producer requirement (86) has been corrected.

4. The system of claim 1, wherein:
the requirement performance parameters (100) are further configured as at least one of a data table (104) of requirement performance parameters, and a requirement performance parameters versus time graph (106).

5. A method (300) of monitoring product requirements in a a cold chain distribution system (200), the cold chain distribution system (200) comprising:
a transport refrigeration system (20) comprising a transport refrigeration unit (28) and an environmentally controlled container (14) for a product (34);
the method comprising
monitoring, using at least one sensor (22), product parameters (82) associated with the product (34) and transmitting the product parameters to a storage device (80), wherein the product parameters include at least one of temperature, pressure, humidity, carbon dioxide, ethylene, ozone, light exposure, and vibrations;
storing (304), using a storage device (80), standard product requirements (84), product producer requirements (86), and the product parameters (82) associated with the product, wherein the product producer requirements are the requirements from a producer of the product for handling of the product;
analyzing (306), using a requirement management system (90), at least one of the standard product requirements, the product producer requirements, and the product parameters, the requirement management system coupled to the storage device, the requirement management system including a requirement generation module (92) and a requirement tracking module (94), the method comprising:
determining, using the requirement generation module, the product producer requirements in response to a product producer input (112) and the standard product requirements, the standard product requirements including government regulations or industry standards;
correcting, using the requirement generation module, the product producer requirement when the product producer requirement conflicts with the standard product requirement;
determining, using the requirement tracking module, requirement performance parameters (100) in response to at least one of the product parameters, standard product requirements, and product producer requirements; and
transmitting (310), using the requirement tracking module (94), the requirement performance parameters (100) to a user device (110),
wherein the user device is configured to activate an alarm (120) when a product producer requirement (86) is not satisfied; **characterized in that**
the requirement performance parameters (100) are configured as a map (102) displaying time-based locations of the product (34) along with the requirement performance parameters at the time-based locations;
wherein the user device is configured to allow the product producer to adjust the operation of the transport refrigeration unit (28) of the transport refrigeration system (20) through the user device.

6. The method of claim 5, further comprising:
receiving, using the requirement generation module (92), the product producer input (112) from a user device (110).

7. The method of claim 5, further comprising:
activating, using the user device (110), an alarm (120) when the product producer requirement (86) has been corrected.

8. The method of claim 5, wherein:
the requirement performance parameters (100) are further configured as at least one of a data table (104) of requirement performance parameters, and a requirement performance parameters versus time graph (106).

## Patentansprüche

1. Kühlkettenverteilungssystem (200), umfassend:
ein Transportkühlsystem (20), das eine Transportkühleinheit (28) und einen umweltkontrollierten Behälter (14) für ein Produkt (34) umfasst; und
ein System zur Überwachung von Produktanforderungen, wobei das System Folgendes umfasst:
mindestens einen Sensor (22), der ausgelegt ist, um dem Produkt zugeordnete Produktparameter (82) zu überwachen und die Produktparameter an eine Speichervorrichtung (80) zu übertragen, wobei die Produktparameter mindestens eines von Temperatur, Druck, Feuchtigkeit, Kohlendioxid, Ethylen, Ozon, Lichtexposition und Vibrationen einschließen;
eine Speichervorrichtung (80) zum Speichern von Standardproduktanforderungen (84), Produktherstelleranforderungen (86) und den dem Produkt zugeordneten Produktparametern (82), wobei die Produktherstelleranforderungen die Anforderungen eines Herstellers des Produkts zur Handhabung des Produkts sind;
ein mit der Speichervorrichtung gekoppeltes Anforderungsverwaltungssystem (90), wobei das Anforderungsverwaltungssystem Folgendes umfasst:
ein Anforderungserzeugungsmodul (92), um die Produktherstelleranforderungen als Reaktion auf eine Produktherstellereingabe (112) und die Standardproduktanforderungen zu bestimmen, wobei die Standardproduktanforderungen staatliche Vorschriften oder Industrienormen einschließen, wobei das Anforderungserzeugungsmodul so ausgelegt ist, dass es die Produktherstelleranforderung korrigiert, wenn die Produktherstelleranforderung mit der Standardproduktanforderung in Konflikt steht; und
ein Anforderungsverfolgungsmodul (94), um Anforderungsleistungsparameter (100) als Reaktion auf mindestens eines der Produktparameter, Standardproduktanforderungen und Produktherstelleranforderungen zu bestimmen; und
eine Benutzervorrichtung (110), wobei das Anforderungsverfolgungsmodul (94) so ausgelegt ist, dass es die Anforderungsleistungsparameter (100) an die Benutzervorrichtung (110) überträgt, wobei die Benutzervorrichtung so ausgelegt ist, dass sie einen Alarm (120) aktiviert, wenn eine Produktherstelleranforderung (86) nicht erfüllt ist; **dadurch gekennzeichnet, dass**
die Anforderungsleistungsparameter (100) als eine Karte (102) ausgelegt sind, die zeitbasierte Positionen des Produkts (34) zusammen mit den Anforderungsleistungsparametern an den zeitbasierten Positionen anzeigt; und
wobei die Benutzervorrichtung so ausgelegt ist, dass sie es dem Produkthersteller ermöglicht, den Betrieb der Transportkühleinheit über die Benutzervorrichtung anzupassen.

2. System nach Anspruch 1, wobei:
das Anforderungserzeugungsmodul (92) so ausgelegt ist, dass es von der Benutzervorrichtung (110) die Produktherstellereingabe (112) empfängt.

3. System nach Anspruch 1, wobei:
die Benutzervorrichtung (110) so ausgelegt ist, dass sie einen Alarm (120) aktiviert, wenn eine Produktherstelleranforderung (86) korrigiert wurde.

4. System nach Anspruch 1, wobei:
die Anforderungsleistungsparameter (100) weiter als mindestens eines von einer Datentabelle (104) von Anforderungsleistungsparametern und einem Anforderungsleistungsparameter-Zeit-Diagramm (106) ausgelegt sind.

5. Verfahren (300) zur Überwachung von Produktanforderungen in einem Kühlkettenverteilungssystem (200), wobei das Kühlkettenverteilungssystem (200) Folgendes umfasst:
ein Transportkühlsystem (20), das eine Transportkühleinheit (28) und einen umweltkontrollierten Behälter (14) für ein Produkt (34) umfasst;
wobei das Verfahren Folgendes umfasst:
Überwachen von dem Produkt (34) zugeordneten Produktparametern (82) unter Verwendung mindestens eines Sensors (22) und Übertragen der Produktparameter an eine Speichervorrichtung (80), wobei die Produktparameter mindestens eines von Temperatur, Druck, Feuchtigkeit, Kohlendioxid, Ethylen, Ozon, Lichtexposition und Vibrationen einschließen;
Speichern (304), unter Verwendung einer Speichervorrichtung (80), von Standardproduktanforderungen (84), Produktherstelleranforderungen (86) und den dem Produkt zugeordneten Produktparametern (82), wobei die Produktherstelleranforderungen die Anforderungen eines Herstellers des Produkts für die Handhabung des Produkts sind;
Analysieren (306), unter Verwendung eines Anforderungsverwaltungssystems (90), mindestens eines der Standardproduktanforderungen, der Produktherstelleranforderungen und der Produktparameter, wobei das Anforderungsverwaltungssystem mit der Speichervorrichtung gekoppelt ist, wobei das Anforderungsverwaltungssystem ein Anforderungserzeugungsmodul (92) und ein Anforderungsverfolgungsmodul (94) einschließt, wobei das Verfahren Folgendes umfasst:
Bestimmen, unter Verwendung des Anforderungserzeugungsmoduls, der Produktherstelleranforderungen als Reaktion auf eine Produktherstellereingabe (112) und der Standardproduktanforderungen, wobei die Standardproduktanforderungen staatliche Vorschriften oder Industrienormen einschließen;
Korrigieren, unter Verwendung des Anforderungserzeugungsmoduls, der Produktherstelleranforderung, wenn die Produktherstelleranforderung mit der Standardproduktanforderung in Konflikt steht;
Bestimmen, unter Verwendung des Anforderungsverfolgungsmoduls, von Anforderungsleistungsparametern (100) als Reaktion auf mindestens eines der Produktparameter, Standardproduktanforderungen und Produktherstelleranforderungen; und
Übertragen (310), unter Verwendung des Anforderungsverfolgungsmoduls (94), der Anforderungsleistungsparameter (100) an eine Benutzervorrichtung (110),
wobei die Benutzervorrichtung so ausgelegt ist, dass sie einen Alarm (120) aktiviert, wenn eine Produktherstelleranforderung (86) nicht erfüllt ist; **dadurch gekennzeichnet, dass**
die Anforderungsleistungsparameter (100) als eine Karte (102) ausgelegt sind, die zeitbasierte Positionen des Produkts (34) zusammen mit den Anforderungsleistungsparametern an den zeitbasierten Positionen anzeigt;
wobei die Benutzervorrichtung so ausgelegt ist, dass sie es dem Produkthersteller ermöglicht, den Betrieb der Transportkühleinheit (28) des Transportkühlsystems (20) über die Benutzervorrichtung anzupassen.

6. Verfahren nach Anspruch 5, weiter umfassend:
Empfangen, unter Verwendung des Anforderungserzeugungsmoduls (92), der Produktherstellereingabe (112) von einer Benutzervorrichtung (110).

7. Verfahren nach Anspruch 5, weiter umfassend:
Aktivieren, unter Verwendung der Benutzervorrichtung (110), eines Alarms (120), wenn die Produktherstelleranforderung (86) korrigiert wurde.

8. Verfahren nach Anspruch 5, wobei:
die Anforderungsleistungsparameter (100) weiter als mindestens eines von einer Datentabelle (104) von Anforderungsleistungsparametern und einem Anforderungsleistungsparameter-Zeit-Diagramm (106) ausgelegt sind.

## Revendications

1. Système de distribution de chaîne du froid (200) comprenant :
un système de réfrigération de transport (20) comprenant une unité de réfrigération de transport (28) et un contenant à environnement contrôlé (14) pour un produit (34) ; et
un système pour la surveillance d'exigences de produit, le système comprenant :
au moins un capteur (22) configuré pour surveiller des paramètres de produit (82) associés au produit et transmettre les paramètres de produit à un dispositif de stockage (80), dans lequel les paramètres de produit incluent au moins un parmi une température, une pression, une humidité, le dioxyde de carbone, l'éthylène, l'ozone, une exposition à la lumière et des vibrations ;
un dispositif de stockage (80) pour stocker des exigences de produit standard (84), des exigences de producteur de produits (86) et les paramètres de produit (82) associés au produit, dans lequel les exigences de producteur de produits sont les exigences provenant d'un producteur du produit pour la manipulation du produit ;
un système de gestion des exigences (90) couplé au dispositif de stockage, le système de gestion des exigences incluant :
un module de génération d'exigences (92) pour déterminer les exigences de producteur de produits en réponse à une entrée de producteur de produits (112) et les exigences de produit standard, les exigences de produit standard incluant des réglementations gouvernementales ou des normes de l'industrie, dans lequel le module de génération d'exigences est configuré pour corriger l'exigence de producteur de produits quand l'exigence de producteur de produits est en conflit avec l'exigence de produit standard ; et
un module de suivi des exigences (94) pour déterminer des paramètres de performance d'exigences (100) en réponse à au moins un parmi les paramètres de produit, les exigences de produit standard et les exigences de producteur de produits ; et
un dispositif utilisateur (110), dans lequel le module de suivi des exigences (94) est configuré pour transmettre les paramètres de performance d'exigences (100) au dispositif utilisateur (110), dans lequel le dispositif utilisateur est configuré pour activer une alarme (120) quand une exigence de producteur de produits (86) n'est pas satisfaite ; **caractérisé en ce que**
les paramètres de performance d'exigences (100) sont configurés comme une carte (102) visualisant des emplacements basés sur le temps du produit (34) conjointement aux paramètres de performance d'exigences au niveau des emplacements basés sur le temps ; et
dans lequel le dispositif utilisateur est configuré pour permettre au producteur de produits de régler le fonctionnement de l'unité de réfrigération de transport par l'intermédiaire du dispositif utilisateur.

2. Système selon la revendication 1, dans lequel :
le module de génération d'exigences (92) est configuré pour recevoir l'entrée de producteur de produits (112) à partir du dispositif utilisateur (110).

3. Système selon la revendication 1, dans lequel :
le dispositif utilisateur (110) est configuré pour activer une alarme (120) quand une exigence de producteur de produits (86) a été corrigée.

4. Système selon la revendication 1, dans lequel :
les paramètres de performance d'exigences (100) sont configurés en outre comme au moins un parmi une table de données (104) de paramètres de performance d'exigences et un graphique des paramètres de performance d'exigences en fonction du temps (106).

5. Procédé (300) de surveillance d'exigences de produit dans un système de distribution de chaîne du froid (200), le système de distribution de chaîne du froid (200) comprenant :
un système de réfrigération de transport (20) comprenant une unité de réfrigération de transport (28) et un contenant à environnement contrôlé (14) pour un produit (34) ;
le procédé comprenant :
la surveillance, en utilisant au moins un capteur (22), de paramètres de produit (82) associés au produit (34) et la transmission des paramètres de produit à un dispositif de stockage (80), dans lequel les paramètres de produit incluent au moins un parmi une température, une pression, une humidité, le dioxyde de carbone, l'éthylène, l'ozone, une exposition à la lumière et des vibrations ;
le stockage (304), en utilisant un dispositif de stockage (80), d'exigences de produit standard (84), d'exigences de producteur de produits (86) et des paramètres de produit (82) associés au produit, dans lequel les exigences de producteur de produits sont les exigences provenant d'un producteur du produit pour la manipulation du produit ;
l'analyse (306), en utilisant un système de gestion des exigences (90), d'au moins un parmi les exigences de produit standard, les exigences de producteur de produits et les paramètres de produit, le système de gestion des exigences étant couplé au dispositif de stockage, le système de gestion des exigences incluant un module de génération d'exigences (92) et un module de suivi des exigences (94), le procédé comprenant :
la détermination, en utilisant le module de génération d'exigences, des exigences de producteur de produits en réponse à une entrée de producteur de produits (112) et les exigences de produit standard, les exigences de produit standard incluant des réglementations gouvernementales ou des normes de l'industrie ;
la correction, en utilisant le module de génération d'exigences, de l'exigence de producteur de produits quand l'exigence de producteur de produits est en conflit avec l'exigence de produit standard ;
la détermination, en utilisant le module de suivi des exigences, de paramètres de performance d'exigences (100) en réponse à au moins un parmi les paramètres de produit, les exigences de produit standard et les exigences de producteur de produits ; et
la transmission (310), en utilisant le module de suivi des exigences (94), des paramètres de performance d'exigences (100) à un dispositif utilisateur (110),
dans lequel le dispositif utilisateur est configuré pour activer une alarme (120) quand une exigence de producteur de produits (86) n'est pas satisfaite ; **caractérisé en ce que**
les paramètres de performance d'exigences (100) sont configurés comme une carte (102) visualisant des emplacements basés sur le temps du produit (34) conjointement aux paramètres de performance d'exigences au niveau des emplacements basés sur le temps ;
dans lequel le dispositif utilisateur est configuré pour permettre au producteur de produits de régler le fonctionnement de l'unité de réfrigération de transport (28) du système de réfrigération de transport (20) par l'intermédiaire du dispositif utilisateur.

6. Procédé selon la revendication 5, comprenant en outre :
la réception, en utilisant le module de génération d'exigences (92), de l'entrée de producteur de produits (112) à partir d'un dispositif utilisateur (110).

7. Procédé selon la revendication 5, comprenant en outre :
l'activation, en utilisant le dispositif utilisateur (110), d'une alarme (120) quand l'exigence de producteur de produits (86) a été corrigée.

8. Procédé selon la revendication 5, dans lequel :
les paramètres de performance d'exigences (100) sont configurés en outre comme au moins un parmi une table de données (104) de paramètres de performance d'exigences et un graphique des paramètres de performance d'exigences en fonction du temps (106).
